# EUROPEAN PATENT APPLICATION

(11) **EP 2 324 795 A1**
(43) Date of publication of application: **25.05.2011**
(21) Application number: 09176456.3
(22) Date of filing: 19.11.2009
(51) Int. Cl.: A61C 13/00, A61C 8/00

(54) **A method and system for designing a dental restoration**

(71) Applicant: 3M Innovative Properties Company, Saint Paul, MN 55133-3427 (US)
(72) Inventor: Kirchner, Bastian, 82205, Gilching (DE); Meurer, Till, 82237, Wörthsee (DE); Waizenegger, Josef, 82229, Seefeld (DE)
(74) Representative: Hohmann, Arno

(57) **Abstract**

A method for designing a dental restoration of a type comprising a dental implant, a dental super structure, and a dental abutment for connecting the implant and the super structure. The method comprises the steps of retrieving a predetermined computer model of an abutment, using a user-created computer representation of a surface of the dental implant for providing a computer representation of an implant receiving surface, and for providing the predetermined abutment model with the implant receiving surface representation to provide a user-adapted abutment model. The method may help minimizing the time and costs in the preparation of a dental restoration.

## Description

### Field of the Invention

The invention relates to a method and system for designing a dental restoration, and in particular to a method and system for designing a dental restoration of a type comprising a dental implant and a dental fixture receivable on the implant.

### Background Art

A dental restoration is typically used to replace part of a natural tooth or even one or more entire natural teeth in a patient's mouth. A replacement of an entire tooth typically comprises a super structure, like a crown or a bridge, which typically is designed to resemble visible parts of a natural tooth. The tooth replacement typically further comprises a dental implant by which the replacement can be anchored in a patient's jaw. In many cases the super structure is connected to the dental implant via an abutment. Therefore such an abutment typically has an interface to the implant as well as a further interface to the super structure.

The dental implant is typically an elongated pin or screw which is inserted in a patient's jaw by surgery. After insertion the implant typically has to heal into the patient's jaw before the abutment and the super structure are placed on it. Typically the dental implant has a certain inclination angle in the patient's jaw to fit the anatomic situation in the patient's mouth, like for example the geometry of the gums and the jaw and their position relative to one another. On the other hand the super structure and/or the abutment may have to be angularly aligned to adjacent teeth so that the visible part of the final dental restoration is generally inline with such teeth. The angle required to fit with adjacent teeth may however be different from the angle of the implant. The abutment therefore may also provide for compensating such an angular offset.

To make the dental restoration fit nicely with adjacent teeth in a patient's mouth the abutment and/or the super structure is/are typically prepared by help of a physical model of the patient's teeth. Such a physical model typically also reproduces at least part of the inserted dental implant, for example an interface of the implant which is supposed to receive the abutment. Therefore a dental technician, for example, may physically shape and fit the abutment and/or the super structure into the desired place at the model.

The abutment and/or the super structure may also be prepared by using a CAD/CAM technique. In such a technique the shape of the physical model is typically captured by an optical measuring device. The so obtained computer model may then be used to design and manufacture the abutment and/or the super structure by computer aid. For the design of the abutment the shape of the implant interface is typically required in the form of computer data or a computer model. There are a variety of different implants on the market having dedicated uniquely shaped interfaces. Accordingly the implant manufacturers normally also provide computer models of at least the interfaces of their implants.

On the other hand in addition to the shape of the interface the actual position of the interface relative to other teeth in a patient's mouth is usually required to design the abutment and the super structure properly. For example the abutment and the super structure are usually designed to not only match with the interface of the implant, but also such that visible parts of the final dental restoration are positioned well inline with adjacent teeth.

In particular the inclination angle of the implant can typically not be provided by the implant manufacturer, but must be determined at the actual situation in a patient's mouth or at the physical model of the patient's teeth. To determine the inclination angle of the implant a measuring element is typically used. The measuring element is typically received on the interface of the implant and subsequently captured by the optical measuring device, like for example a three-dimensional scanner. The measuring element is typically shaped, for example elongated, such that its inclination angle can be determined from the captured shape. Some measuring elements also have a structure which indicates a rotational orientation, for example for use with implants having interfaces that require rotational positioning of the abutment to be received.

The inclination angle and eventually the rotational orientation are typically required to appropriately position the computer model of an implant interface on a CAD system so that further parts of the dental restoration can be designed based thereon.

In summary the implant manufacturers typically have to provide data about the shape of the implant, data about the measuring element, and physical measure elements. On the other hand dental labs which use CAD/CAM methods for making tooth replacements based on several implant types typically purchase and maintain data libraries holding data about different implant types and measuring elements, and typically keep a stock holding a variety of physical measuring elements. Further the dental labs typically determine the inclination angle (and eventually the rotational orientation) of the implant in addition to capturing the situation in a patient's mouth.

Although these approaches are established in the preparation of dental restorations there is still a need for facilitating the design of a dental restoration using a certain implant of a variety of different implants. It is further desirable to minimize the time period required to provide a dental restoration, and to provide a relatively inexpensive dental restoration that nevertheless has a relatively high quality.

### Summary of the Invention

The invention in one aspect relates to a method for designing a dental restoration of a type comprising a dental implant and a dental fixture receivable on the implant. The method comprises the steps of:
- retrieving a predetermined computer model of a fixture;
- using a user-created computer representation (A') of a surface (A) of the dental implant for providing a computer representation (B') of an implant receiving surface (B);
   and
- providing the predetermined fixture model with the implant receiving surface representation (B') to provide a user-adapted fixture model.

In particular the fixture may be a dental abutment. Such an abutment may be adapted to be received on the dental implant, and to receive a dental super structure, like a crown or bridge. The fixture may further replace substantially the entire visible part of a tooth in one piece so that an additional superstructure may not be required.

The invention may be advantageous in that it preferably allows for making a physical model of a fixture, for example a wax-up, unnecessary because the invention preferably enables a combination of a user-defined implant surface representation and a predetermined fixture model. The invention may further be advantageous in that it may make a measuring element for determining an implant inclination angle and/or an implant rotational orientation unnecessary in the preparation of a dental restoration. Further the invention may facilitate the preparation of a dental restoration based on one of a variety of different dental implants. In particular besides the presence of a physical implant or part thereof further information about the implant may not be required for the preparation of the dental restoration. The invention may further not require a determination of an inclination angle of the dental implant in a patient's mouth. Because the determination of the inclination angle may be omitted, tolerances resulting therefrom are preferably avoided so that the invention may help maximizing the precision of the dental restoration. The invention may further generally help minimizing efforts in the preparation of a dental restoration, and may provide for a relatively inexpensive dental restoration.

In one embodiment the method further comprises the step of using a computer representation (D') of an inner super structure surface (D) to provide a computer representation (C') of an outer fixture surface (C). The method may further comprise the step of providing the predetermined fixture model with the implant receiving surface representation (B') and the outer fixture surface representation (C') to provide the user-adapted fixture model. Thus the user-adapted fixture model may be provided with the implant receiving surface representation (B') based on the implant surface representation (A'), and optionally in addition with the outer fixture surface representation (C') based on the inner super structure surface representation (D'). The outer fixture surface representation (C') may however also be part of the predetermined fixture model, and may remain generally unchanged.

Further the method may comprise the step of modifying the outer fixture surface representation (C') and/or the implant receiving surface representation (B') with computer aid. The method may also comprise the step of modifying the predetermined fixture model and/or the user-adapted fixture model with computer aid. Therefore the invention is advantageous in that it may provide for a rapid design of a fixture model, but may in addition enable a user modification of the predetermined fixture model.

In one embodiment the method may comprise the step of capturing a surface (A) of the dental implant to provide the user-created implant surface representation (A'). The user-created implant surface representation (A') may be obtained from measuring a surface of a physical dental implant, for example from optically or mechanically scanning a surface of a physical dental implant. Such a physical implant may be an implant analog, for example, which resembles an implant which is insertable or inserted in a patient's mouth. However for better clarity it is generally referred to an "implant" in this specification although in some instances an implant analog may be used instead of an actual implant. Further the method may comprise the step of storing the user-created implant surface representation (A') as reference implant surface representation (A") in a database. Such a reference implant surface representation (A") may thus be maintained available for further use so that a new capturing of a dental implant may be avoided. This may help minimizing time and costs in the preparation of the dental restoration.

The method may further comprise the step of determining at least one of an inclination angle and a rotational orientation of the dental implant. Although such a method step may be made unnecessary by the invention, the invention may still allow the determination of the inclination angle and/or the rotational orientation of the dental implant. Thereby the compatibility of certain CAD software operating according to a prior art method may be maintained. For example software configured to comply with a method requiring information about the inclination angle and/or the rotational orientation may still be supported by the present invention.

In one embodiment the method further comprises the step of matching the user-created implant surface representation (A') with at least one reference implant surface representation (A"). The reference implant surface representation (A") may for example be retrieved from a database storing a plurality of different predetermined implant surface representations. Further the appropriate reference implant surface representation (A") may be identified from comparing the user-created implant surface representation (A') with at least one of the reference implant surface representations, and from selecting the reference implant surface representation (A") which matches the user-created implant surface representation (A') best, for example in shape. The appropriate reference implant surface representation (A") may further be selected from a database by a user, for example by user input of certain information about the dental implant, like for example the type and/or the manufacturer.

In another embodiment the method comprises the step of conforming the user-created implant surface representation (A') at least partially to the reference implant surface representation (A"). Thereby the precision of the user-created implant surface representation (A') may be increased. Further this may allow for capturing the user-created implant surface representation (A') at a relative low precision (for example relatively low scan resolution) and increasing the precision subsequently. Thus a less complex measuring device may be used and/or less measuring time may be required for capturing the user-created implant surface representation (A'). The method may further comprise the step of using the predetermined implant surface representation to determine the inclination angle and/or the rotational orientation of the dental implant. This may be performed, for example, by determining the inclination angle and/or the rotational orientation of the user-created implant surface representation (A') relative to the reference implant surface representation (A"). Thus the inclination angle and/or the rotational orientation may be determined from comparing the alignment between two structures rather than from deriving the inclination angle and/or the rotational orientation from only one structure itself. This may provide for a relatively precise determination of the inclination angle and/or the rotational orientation.

In one embodiment the fixture model may be retrieved from a database holding a plurality of different fixture models. The fixture model may be selected by a user, for example. Therefore a user may provide information about the dental restoration, for example the type of tooth to be restored (front tooth or side tooth, for example), and this information may be used to retrieve the appropriate fixture model.

The fixture model may then be provided with the implant receiving surface representation (B'). The method may further comprise the step of replacing a predetermined implant receiving surface representation that is associated with the fixture model. The predetermined implant receiving surface representation may in particular be replaced by the implant receiving surface representation (B') which is based on the user-created computer representation (A'). For example the fixture model may be provided by an implant manufacturer, and the fixture model may comprise a predetermined implant receiving surface representation belonging to a certain implant of this manufacturer. And the invention preferably allows replacing this predetermined implant receiving surface by a customized one.

In a further embodiment the implant receiving surface representation (B') may be provided without a determination of an inclination angle and/or the rotational orientation of the dental implant being required or performed. Thereby the determination of the inclination angle and/or rotational orientation may be made unnecessary.

In one embodiment the method further comprises the step of providing an outer super structure surface representation (E') of the super structure. Such a surface may be designed to fit a certain situation in a patient's mouth. The method may further comprise the step of creating a computer model of the super structure based on the inner and outer super structure surface representations (D', E'). The outer super structure surface representation (E') and the creation of the super structure model may be performed on a CAD system for example.

In one embodiment the user-adapted fixture model and/or the super structure model are used to create machine instructions for machining the fixture and the super structure. Further the method may comprise the step of machining the fixture and the super structure. Machining may comprise material removal (like milling or grinding for example) or material build-up (like laser sintering or 3D printing for example.

In one embodiment the method comprises the step of providing a dental implant link which is adapted to be received on a dental implant base. For the purpose of this specification the term "implant base" refers to the part of the dental restoration which is typically used for anchoring the dental restoration in a patient's jaw, although the same part may also be simply referred to as "implant" in dentistry. Further for the purpose of this specification the dental implant link and the dental implant base, when combined, may be referred to as "dental implant", although in dentistry the dental link may sometimes be referred to as a part of a fixture or an abutment. Accordingly the dental implant link together with the implant base may form the dental implant.

A further aspect of the invention relates to a system for designing a dental restoration of a type comprising a dental implant and a dental fixture receivable on the implant. The system is adapted for:
- retrieving a predetermined computer model of a fixture;
- using a user-created computer representation (A') of a surface (A) of the dental implant for providing a computer representation (B') of an implant receiving surface (B);
   and for
- providing the predetermined fixture model with the implant receiving surface representation (B') to provide a user-adapted fixture model.

In one embodiment the system is adapted for using a computer representation (D') of an inner super structure surface (D) to provide a computer representation (C') of an outer fixture surface (C), wherein the system is adapted for providing the predetermined fixture model with the implant receiving surface representation (B') and the outer fixture surface (C') to provide the user-adapted fixture model.

In a further embodiment the system is further adapted for modifying the outer fixture surface representation (C') and/or the implant receiving surface representation (B') with computer aid.

In still another embodiment the system is adapted for modifying the predetermined fixture model and/or the user-adapted fixture model with computer aid.

Thus the system is preferably generally adapted to perform the method of the invention. Features of the method of the invention therefore may also be features of the system of the invention.

In one embodiment the system comprises a database holding a plurality of predetermined fixture models. The system may further comprise an interface for receiving the user-created surface representation (A') of the dental implant. Therefore the system of the invention may enable the preparation of a dental restoration based on a physically available dental implant and/or dental link and otherwise independent from information or materials from the implant manufacturer. On the other hand the system thus may allow for the preparation of a dental restoration using predetermined fixture model. Therefore the user-adapted fixture may also be created relatively rapidly.

### Brief Description of the Figures

- Fig. 1: is an exploded view of a dental restoration according to an embodiment of the invention;
- Fig. 2: is a schematic view of a physical model of a patient's jaw which has an implant according to an embodiment of the invention;
- Fig. 3: is a schematic view illustrating a method step of capturing the physical model and an implant surface according to an embodiment of the invention;
- Fig. 4: is a schematic view illustrating a method step of capturing an implant surface to provide a user-created implant surface representation according to an embodiment of the invention;
- Fig. 5: is a schematic view illustrating a method step of matching a user-created implant surface representation with a reference implant surface representation according to an embodiment of the invention;
- Fig. 6: is a schematic view illustrating a method step of retrieving a predetermined fixture model according to an embodiment of the invention;
- Fig. 7: is a schematic view illustrating a method step combining the fixture model and the user-defined implant surface representation according to an embodiment of the invention;
- Fig. 8: is a schematic view illustrating a method step of designing an inner surface of a super structure according to an embodiment of the invention;
- Fig. 9: is a schematic view illustrating a method step of designing a super structure according to an embodiment of the invention; and
- Fig. 10: is a cross-sectional view showing a patient's jaw and the dental restoration according to an embodiment of the invention.

### Detailed Description of the Invention

The method of designing a dental restoration according to the invention may generally comprise steps of capturing a situation in a patient's mouth, and further steps of designing and manufacturing dental restoration components for fitting the situation in the patient's mouth. The situation in a patient's mouth may for example be captured from a plaster model which is casted from an impression of the patient's teeth or directly from the patient's mouth by optically scanning, for example. The so captured situation may then be used as a basis for designing components of the dental restoration.

For better understanding the dental restoration is described in its configuration first, and subsequently the method of the invention is described by way of an example.

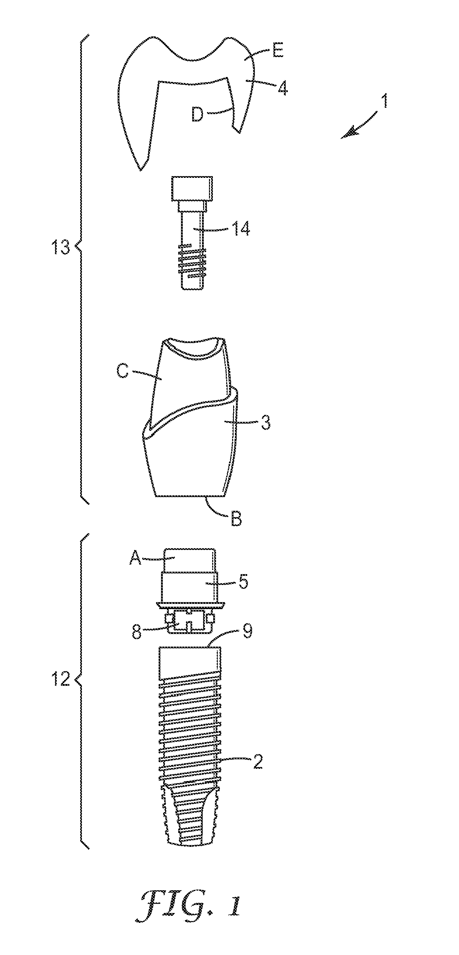

Fig. 1 shows a dental restoration 1 as it may be used to replace an entire natural tooth in a patient's mouth. The illustrated dental restoration 1 basically has an implant 12 and a head structure 13. The implant 12 and the head structure 13 are adapted for interconnection with one another. Therefore the implant 12 has an implant surface A, and the head structure 13 has an implant receiving surface B (not visible). The implant surface A and the implant receiving surface B are adapted to mate with one another. The shape of the implant and implant receiving surfaces A, B may generally correspond to each other. Preferably the implant and implant receiving surfaces A, B are substantially proportionally scaled relative to one another such that an adhesive can be arranged between.

In the example shown in Fig. 1 the implant 12 is formed by an implant base 2 and a dental link 5 which in this example form separate pieces. Such a configuration may for example be used to attach a ceramic based head structure to a metal implant. The implant 2 and the dental link 5 are adapted such that they can be connected with one another. Therefore the dental link 5 may have an implant connector 8 for connecting with a link connector 9 of the implant 2. The implant and link connectors 8, 9 are adapted to mate with one another, and may be further adapted to snap fit with one another. However in another example (not shown) the link and the implant base may form an implant in one piece. Typically the implant or implant base is inserted in a patient's mouth first, and - after the implant has healed into the patient's jaw - subsequently completed to form the dental restoration.

The head structure 13 has a fixture 3 and a super structure 4. In the example the super structure is a dental crown (for restoring one tooth), however may in another example be a bridge (for restoring two or more teeth). Further the fixture in the example is an abutment, but may in another example be shaped to replace substantially the entire visible part of a tooth in one piece, and thus may form the entire head structure. Therefore the specification may further generally refer to a fixture although an abutment may be shown in the Figures. The fixture 3 has an outer fixture surface C which is adapted to receive the super structure 4. Accordingly the super structure 4 has an inner super structure surface D fitting with the outer fixture surface C. For example the inner super structure surface D and the outer fixture surface C may generally correspond in shape with one another. Further the inner super structure surface D and the outer fixture surface C may be scaled proportionally relative to one another. Thus the inner super structure surface D and the outer fixture surface C may be shaped such that a bonding layer can be arranged between. The bonding layer may for example have a generally uniform thickness, or may taper off toward its outside boundaries. Such a bonding layer may for example comprise a dental luting cement. The super structure 4 may further comprise a framework and a veneering (not shown in detail). In this case the framework may be basically a supporting structure for providing a certain mechanical stability for the dental restoration, whereas the veneering may provide for pleasing aesthetic characteristics. Also in this example the abutment and the superstructure may be formed by the fixture in one piece which is then provided with a veneering.

The dental restoration 1 further has a screw 14 for mounting the link 5 onto the implant 12. In the example shown the dental restoration 1 is adapted such that the screw 14 can extend through the fixture 3 and the link 5 into the implant base 2. In particular the fixture 3 and the link 5 each have a through hole through which the screw 14 can extend. Thus the link 5 may be affixed to the fixture 3 first and the so formed assembly may be subsequently secured on the dental implant 12.

A method in the preparation of the dental restoration according to an embodiment of the invention is described in the following. The implant 12 may be standardized and made available to dentists for use in a patient's mouth. Further the head structure 13 may be individually prepared by a dental lab to fit a certain situation in a patient's mouth as well as a certain standardized implant. The implant 12 and the head structure 13 may then be merged, for example by the dentist, to form the dental restoration.

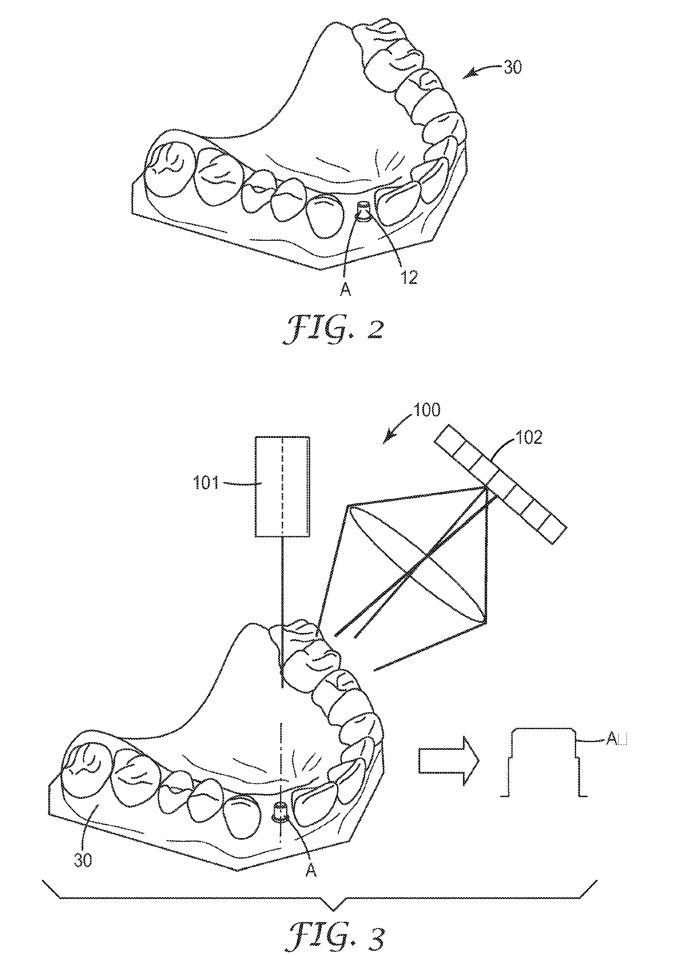

Fig. 2 shows a physical model 30 of a patient's jaw having an implant 12. The physical model 30 represents the situation in a patient's mouth including the implant 12 inserted in the jaw. The model may for example be a plaster model which represents at least the implant surface A of the implant or link (shown in detail in Fig. 1).

Fig. 3 illustrates a method step of capturing the implant surface A to provide a user-created implant surface representation A'. For capturing the implant surface A an optical measuring device 100 (not shown in all detail) is used. The illustrated optical measuring device is a light scanner which has a projector 101 for illuminating an object (in the example the physical model 30) with a light point or a pattern (not illustrated), for example with light stripes. The optical measuring device 100 further has a CCD camera 102 for capturing the image of the illuminated object. The object is typically captured in several images from different angles and/or orientations. The captured images are then used to create a three-dimensional computer representation of the object in the form of surface data. In the example the measuring device 100 is used to capture the implant surface A to form the user-created implant surface representation A'. Further the measuring device 100 may be used to capture surfaces of an adjacent tooth or teeth and/or a surface of the gums to provide a restoration neighborhood representation (not shown). The user-created implant surface representation A' can be transmitted to a computer, for example one having a CAD system installed, where it can be further processed.

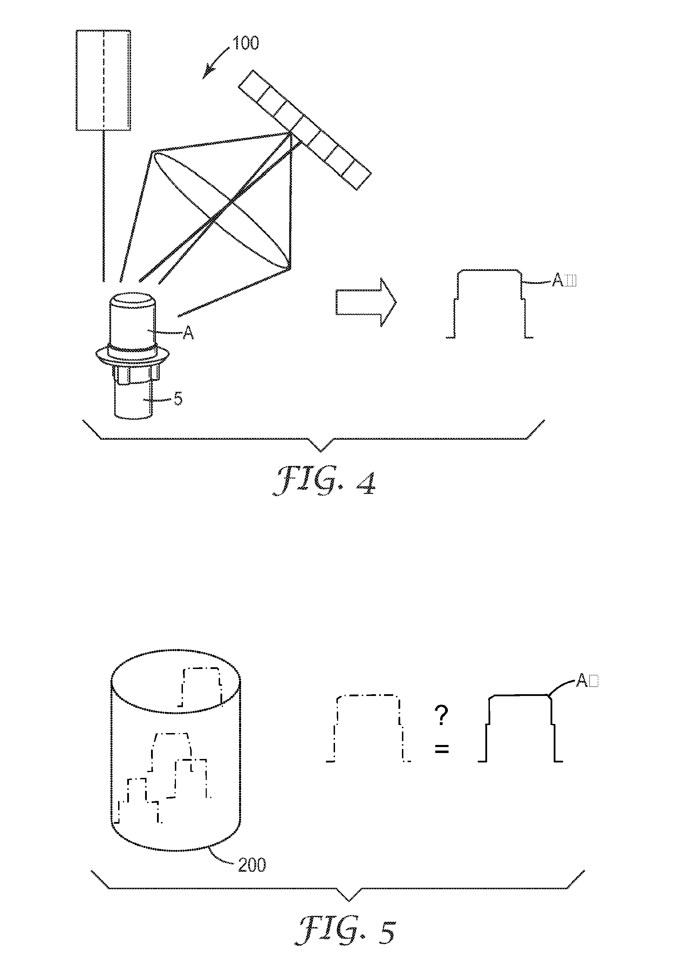

Fig. 4 illustrates a method step in which a reference implant surface representation A" is obtained outside its arrangement relative to adjacent teeth, for example outside the physical model shown in Fig. 3. Thereby the accessibility of the implant surface A relative to the optical measuring device 100 may be optimized, and thus a relative precise reference implant surface representation A" may be obtained. This is because structures surrounding the implant (for example adjacent teeth or the gums) may hide part or all of the implant in some situations when the implant is positioned relative to the camera of the measuring device. As a result the implant surface may not be visible for the camera from certain perspectives so that the implant surface may not be captured from such perspectives. Thus a three-dimensional computer representation of an implant surface which is not captured from certain perspectives may be less precise than an implant surface being unrestricted in that regard.

The method step may further comprise matching of the user-created implant surface representation A' (shown in Fig. 3) with the reference implant surface representation A". This method step may be generally used to verify the user-created implant surface representation with the reference implant surface A". Further the user-created implant surface representation A' may be conformed to the reference implant surface A". Thereby the precision of the user-created implant surface representation A', and thus in the overall preparation of the dental restoration may be maximized.

The reference implant surface A" may further be stored on a computer, for example in a database for further use.

Fig. 5 shows a database 200 holding a plurality of reference implant surface representations. Such reference implant surface representations may result from capturing a plurality of different implants and/or links outside their arrangement relative to adjacent teeth. Additionally or alternatively such reference implant surface representations may be provided by implant suppliers and/or manufacturers in the form of data. Therefore the database may contain a plurality of reference implant surface representations for different types (sizes and/or shape) of implants.

The database 200 may be used for matching of the user-created implant surface representation A' with a reference implant surface representation retrieved from the database 200. For example an appropriate reference surface representation A" (not shown) may be identified in the database based on a comparison of the implant surface representation A' with at least one reference surface representation contained in the database 200. The reference implant surface representation A" which matches the implant surface representation A' best may then be proposed to a user who can accept or reject the predetermined implant surface representation A" for further use. The implant surface representation A' may therefore be captured at a relatively low precision (for example relatively low resolution and/or relatively high tolerances) but at a precision sufficient to select a more precise reference implant surface representation A" from the database. This may minimize the time, and further may allow using a relatively inexpensive measuring device, for capturing the implant surface representation A'.

The reference surface representation A" may further be selected by a user, for example by user input of date about the dental implant (for example implant type, and/or implant manufacturer). The computer may therefore have a user interface via which such data can be entered, for example via keyboard, by a data carrier, via a data capturing device, like a bar code or RFID reader, or in any other appropriate manner. The so identified reference surface representation A" may be then retrieved and used in the matching as described and illustrated under Fig. 4.

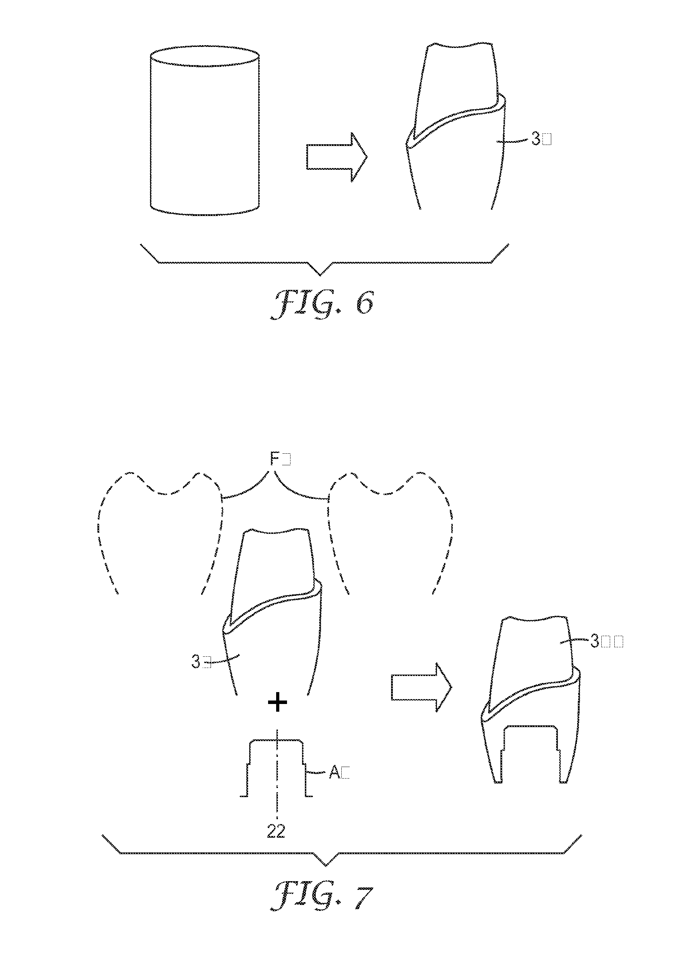

Fig. 6 illustrates a method step of retrieving a predetermined computer model 3' of a fixture. Such a predetermined fixture model may be retrieved from a database holding a plurality of different predetermined fixture models. Such a database may for example hold predetermined fixture models having different shapes, for example typical basic shapes of human teeth. The method may further comprise the step of selecting the predetermined fixture model 3' by user input. For example the user may enter information about the type of tooth to be restored (for example a front or side tooth) into a computer, and the computer may retrieve the appropriate predetermined fixture model. The predetermined fixture model may be modified by the user using a CAD system.

Fig. 7 illustrates a method step of combining the user-created implant surface representation A', and the predetermined fixture model 3' (eventually modified by the user). The restoration neighborhood representation F' may be used to align the predetermined fixture model 3' relative to the implant surface representation A'. The dental implant may have a certain position, inclination angle and rotational orientation in a patient's mouth, and the implant surface A' may be positioned, inclined and oriented accordingly. In contrast to the prior art the implant surface representation A' may be directly used for combination with the fixture model 3', for example without the need of a positional, angular or rotational alignment. This is because the position, inclination angle, and rotational orientation of the implant surface representation A' is preferably already captured along with capturing the restoration neighborhood representation, and therefore an alignment of the fixture model to the restoration neighborhood representation automatically also establishes the correct alignment with the implant surface representation A'. This is in contrast to the prior art in which an implant surface is typically provided independent from a restoration neighborhood, for example in the form of a predetermined dataset supplied by an implant manufacturer. Such a predetermined implant surface typically has to be brought in alignment with the actual situation in a patient's mouth. For example the implant in the patient's mouth may be inclined according to an implant inclination axis 22 so that the predetermined implant surface representation may have to be co-aligned with that axis before combination with the fixture model. Thus the invention may provide for saving at least one alignment step. Further tolerances in an alignment of a predetermined implant surface may have greater impact on the precision of the dental restoration than tolerances in the implant surface itself (for example resulting from optically capturing). Therefore in the prior art typically a measuring element is used for precisely determining the alignment of an implant surface, however such a measuring element may be saved by the present invention.

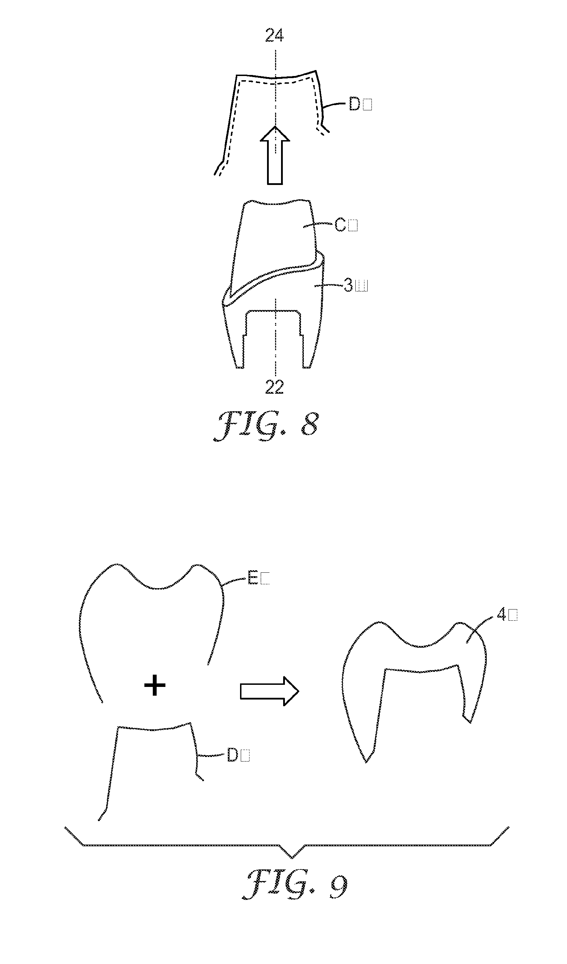

So the so created user-adapted fixture model 3" may then be used for designing the dental super structure as illustrated in Figs. 8 and 9.

Fig. 8 illustrates a method step in which an outer fixture surface representation C' is used to determine an inner super structure surface representation D'. The outer fixture surface representation C' and the inner super structure surface representation D' may define a placement direction which is a direction in which the super structure and the fixture can be moved toward one another for assembly. The placement direction may be defined by a placement axis 24 which may be inclined relative to the inclination axis 22 of the implant. Thus a fixture manufactured according to the user-adapted fixture model 3" may compensate for an inclination between the placement axis 24 and the inclination axis 22 of the implant. As indicated by the dashed line relative to the solid line in the Figure the inner super structure surface representation D' may be enlarged generally proportionally relative to the outer fixture surface representation C'. This may allow for accommodation of a bonding material (for example a luting cement) between the fixture and the super structure.

Fig. 9 illustrates a method step in which the inner super structure surface representation D' is combined with an outer super structure surface representation E' to form a computer model 4' of a super structure. Such an outer super structure surface representation E' may represent an outer surface of a framework, or an outer or inner surface of a veneering, for example. The skilled person will recognize methods to create other surface representations as desired based on one or more surface representations created according the method steps of the invention. The computer model of a super structure may then be transmitted to a dental manufacturing machine in which the super structure may be manufactured.

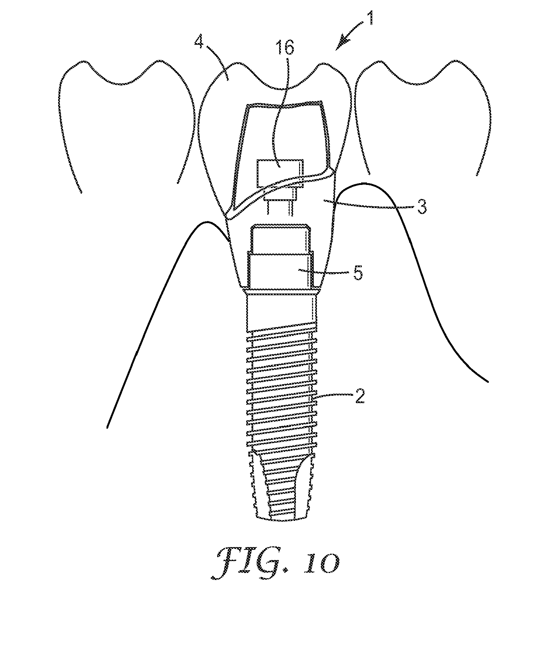

Fig. 10 shows the dental restoration 1 when assembled and placed in a patient's mouth. Typically a dentist assembles the fixture 3 to the implant body 2 by use of the screw 14. At that stage the fixture 3 may already be fixed on the dental link 5, for example by an adhesive. Thus the implant and part of the head structure may be mechanically secured with one another. Further the interconnection between the implant and the head structure may be sealed against penetration of substances. Therefore for example bacteria may be prevented from penetrating between the implant and the head structure. This may help maximizing the durability of the dental restoration. The dentist may subsequently assemble the super structure 4 on the fixture 3, for example by use of a luting cement. Thus the super structure 4 and the fixture 3 may be sealingly secured with one another. Substances and/ or bacteria may therefore be prevented from penetrating between the super structure 4 and the fixture 3. This also may help maximizing the durability of the dental restoration.

## Claims

1. A method for designing a dental restoration of a type comprising a dental implant and a dental fixture receivable thereon, the method comprising the steps of:
- retrieving a predetermined computer model of the fixture;
- using a user-created computer representation (A') of a surface (A) of the dental implant for providing a computer representation (B') of an implant receiving surface (B);
and
- providing the predetermined fixture model with the implant receiving surface representation (B') to provide a user-adapted fixture model.

2. The method of claim 2, further comprising the step of using a computer representation (D') of an inner super structure surface (D) to provide a computer representation (C') of an outer fixture surface (C), wherein the method comprises the step of providing the predetermined fixture model with the implant receiving surface representation (B') and the outer fixture surface representation (C') to provide the user-adapted fixture model.

3. The method of claim 1 or 2, in which the fixture is a dental abutment.

4. The method of claim 1, 2 or 3, further comprising the step of modifying the outer fixture surface representation (C') and/or the implant receiving surface representation (B') with computer aid.

5. The method of any of the preceding claims, further comprising the step of modifying the predetermined fixture model and/or the user-adapted fixture model with computer aid.

6. The method of any of the preceding claims, further comprising the step of capturing a surface (A) of the dental implant to provide the user-created implant surface representation (A').

7. The method of claim 6, further comprising the step of determining at least one of an inclination angle and a rotational orientation of the dental implant.

8. The method of claim 7, further comprising the steps of:
- matching the user-created implant surface representation (A') with at least one reference implant surface representation (A");
- conforming the user-created implant surface representation (A') at least partially to the reference implant surface representation (A").

9. The method of any of claims 2 to 8, further comprising the steps of:
- providing an outer super structure surface representation (E') of the super structure; and
- creating a computer model of the super structure based on the inner and outer super structure surface representations (D', E').

10. The method of any of the preceding claims, further comprising the step of providing a dental implant link which is adapted to be received on a dental implant base, wherein the dental implant base and the dental implant link together form the dental implant.

11. A system for designing a dental restoration of a type comprising a dental implant and a dental fixture receivable thereon, the system being adapted for:
- retrieving a predetermined computer model of an fixture;
- using a user-created computer representation (A') of a surface (A) of the dental implant for providing a computer representation (B') of an implant receiving surface (B);
and for
- providing the predetermined fixture model with the implant receiving surface representation (B') to provide a user-adapted fixture model.

12. The system of claim 11, being further adapted for using a computer representation (D') of an inner super structure surface (D) to provide a computer representation (C') of an outer fixture surface (C), wherein the system is adapted for providing the predetermined fixture model with the implant receiving surface representation (B') and the outer fixture surface (C') to provide the user-adapted fixture model.

13. The system of claim 11 or 12, being further adapted for modifying the outer fixture surface representation (C') and/or the implant receiving surface representation (B') with computer aid.

14. The system of any of the preceding claims, being further adapted for modifying the predetermined fixture model and/or the user-adapted fixture model with computer aid.

15. The system of any of the preceding claims, comprising at least one of a database holding a plurality of predetermined fixture models, and an interface for receiving the user-created surface representation (A') of the dental implant.
